# EUROPÄISCHE PATENTSCHRIFT

(11) **EP 1 546 551 B1**
(45) Veröffentlichungstag und Bekanntmachung des Hinweises auf die Patenterteilung: **26.02.2014**
(21) Anmeldenummer: 03798164.4
(22) Anmeldetag: 16.09.2003
(51) Int. Cl.: F03D 1/06, F03D 11/00, B64C 23/00

(54) **ROTORBLATT FÜR EINE WINDTURBINE**
ROTOR BLADE FOR A WIND TURBINE
PALE DE ROTOR POUR UNE TURBINE EOLIENNE

(30) Priorität: 21.09.2002 DE 10244022
(43) Veröffentlichungstag der Anmeldung: 29.06.2005
(73) Patentinhaber: Wobben Properties GmbH, 26605 Aurich (DE)
(72) Erfinder: Wobben, Aloys, 26607 Aurich (DE)
(74) Vertreter: Eisenführ Speiser
(86) Internationale Anmeldenummer: PCT/EP2003/010274
(87) Internationale Veröffentlichungsnummer: WO 2004/029449

(56) Entgegenhaltungen:
- EP-A- 0 947 693
- GB-A- 1 106 531
- US-A- 2 102 527
- US-A- 3 120 363

## Beschreibung

Die Erfindung betrifft ein Rotorblatt einer Windenergieanlage.

Rotorblätter dieser Art sind bereits mannigfaltig bekannt, z,B, aus EP 0 947 693 sowie GB 1,106,531. Es besteht regelmäßig die Bestrebung, die Rotorblätter einer Windenergieanlage so anzulegen, dass sie einen geringmöglichen Schallleistungspegel im Betrieb aufweisen und darüber hinaus einen so geringen Luftwiderstandswert aufweisen, dass zumindest ein geringmögliches Maß an Verlusten der Windenergie durch die Rotorblätter verursacht wird.

Regelmäßig bestehen die Ansätze zur Reduzierung des Sehallleistungspegels wie auch zur Reduzierung des CW-Wertes (Widerstandsbeiwert) darin, ein für das Rotorblatt entsprechend angepasstes äußeres Design zu verändem bzw, zu verbessern.

Aufgabe der vorliegenden Erfindung ist es, Maßnahmen anzugeben, wie der CW-Wert wie auch der Schallleistungspegel von Rotorblättern von Windenergieanlagen noch weiter verbessert werden kann.

Die Erfindung wird mit einem Windenergieanlagen-Rotorblatt mit den Merkmalen nach Anspruch 1 gelöst. Vorteilhafte Weiterbildungen sind in den Unteransprüchen beschrieben.

Bei der vorliegenden Erfindung wird vorgesehen, dass wenigstens auf der Saugseite des Rotorblattes ein elektrisches Feld ausgebildet ist. Dieses elektrische Feld ist ein elektrostatisches Feld mit einer Spannung von z.B. etwa -4 kV an der Oberseite des Rotorblatts. Das elektrische Feld ist im Bereich von der Nase des Rotorblatts bis zur Hinterkante bevorzugt bei wenigstens 30% des Rotorblatts im Rotorblattspitzenbereich, also dem Bereich, der der Rotorblattwurzel des Rotorblatts am weitesten entfernt liegt, ausgebildet,

Zur Ausbildung des elektrischen Feldes ist auf der Saugseite des Rotorblatts eine netzartige Leiterstruktur ausgebildet. Die netzartige Leiterstruktur kann aus einer Leitermatrix (z.B. aus Kupfer) bestehen, wobei eine Vielzahl von Leitern maschenförmig neben und quer zueinander liegen und der Abstand parallel zueinander im Bereich von etwa 1 bis 10 mm, bevorzugt im Bereich von 4 mm oder geringer liegt.

Es konnte nunmehr herausgefunden werden, dass das Anlegen eines elektrischen Feldes von einem Wert von etwa -2 bis -10 kV, bevorzugt etwa -4 kV der Leistungswert des Rotorblattes zu einem Faktor von etwa 10 bis 15%, bevorzugt 12% ansteigt. Gleichzeitig verringert sich der Schallleistungspegel des erfindungsgemäßen Rotorblatts um ca. 1 dB oder weniger.

Zur Aufrechterhaltung des elektrischen Feldes auf der Saugseite muss eine elektrische Leistung bei Rotorblättern mit einer Länge von etwa 20 m von etwa 5 kW pro Rotorblatt und bei einer Rotorblattlänge von etwa 32 m von etwa 15 kW pro Rotorblatt bereitgestellt werden.

Die nachfolgend aufgeführten Diagramme D1, D2 und D3 zeigen das Verhalten des CW-Wertes abhängig von der Spannung des elektrischen Feldes sowie das Verhalten des Leistungsbeiwertes (Cp - coefficient of power) abhängig von der Spannung des elektrischen Feldes.

Hierbei ist zu erkennen, dass der Leistungsbeiwert Cp bei Leistungswerten etwa -4 kV bzw. -3,9 kV als ein Maximum erreicht und bei Spannungswerten von mehr als -3,9 bzw. weniger als -4 kV wieder absinkt.

Es kann ein elektrisches Feld beispielsweise mit gleichgerichteter oder entgegengesetzter Spannung an der Druckseite des Rotorblatts angelegt werden.

Das Anlegen des elektrischen Feldes an dem Rotorblatt kann aus einer galvanischen Verbindung zwischen dem Rotorblatt und einer Spannungs- bzw. Ladungsversorgungseinrichtung innerhalb der Windenergieanlage bestehen. Bevorzugt sind Mittel zum Auftrennen dieser galvanischen Verbindung vorgesehen, wobei diese Mittel in Form von Schaltern bestehen können, die die galvanische Trennung bereits beim Rotorblatt, an der Rotorblattwurzel oder der Nabe oder innerhalb der Windenergieanlage ermöglichen. Es ist auch möglich, mehr als einen Schalter innerhalb der galvanischen Verbindung auszubilden.

Die galvanische Auftrennung zwischen Spannungs(Ladungs)-Versorgung und dem Rotorblatt wird bevorzugt dann unterbrochen, wenn ein Gewitter herannaht. Hierbei ist es auch möglich, dass die Unterbrechung automatisch erfolgt, wenn eine entsprechende Gewitterlage erkannt wird. Dies kann beispielsweise aufgrund starker Leistungsschwankungen gemessen werden, weil starke Leistungsschwankungen der Windenergieanlage bzw. starke Schwankungen des Windes ein Hinweis auf Böen sind, die regelmäßig einem Gewitter vorhergehen. Es ist aber auch möglich, durch die Messung der elektrischen Spannung innerhalb der Luft ein herannahendes Gewitter festzustellen. Üblicherweise steigt (sinkt) diese Spannung bei Herannahen eines Gewitters an und kann daher als ein relativ sicheres Indiz für ein solches Gewitter genommen werden.

Die Abschaltung des Feldes also durch die galvanische Trennung zwischen dem Rotorblatt und der Spannungsversorgung dient dem Schutz der gesamten Windenergieanlage, insbesondere den Rotorblättern. Selbstverständlich ist es auch möglich, mit anderen bereits bekannten Mitteln, mit denen das Herannahen eines Gewitters festgestellt werden kann, eine entsprechende Unterbrechung der Spannungsversorgung automatisch zu steuern.

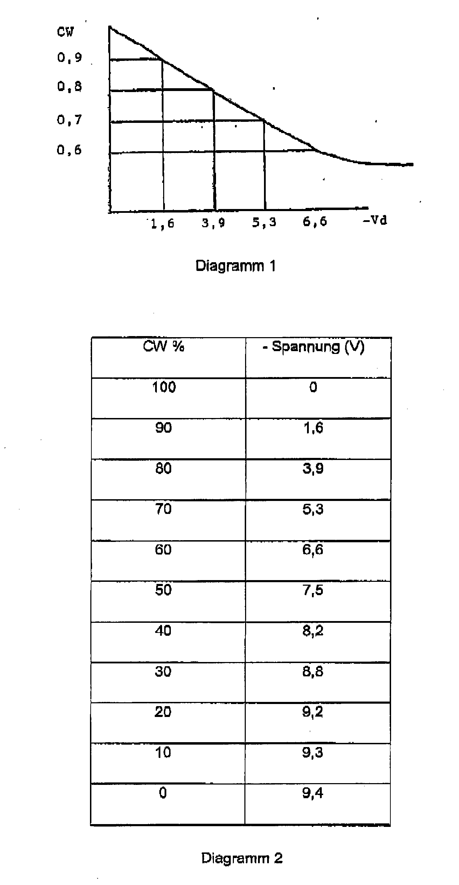

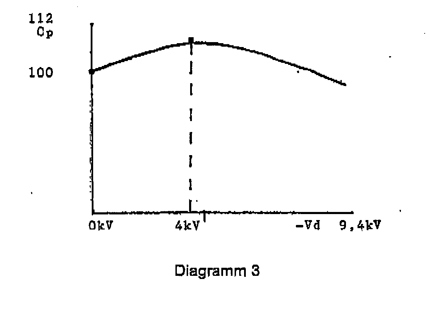

## Patentansprüche

1. Windenergieanlagen-Rotorblatt mit einer Druckseite und einer Saugseite, **dadurch gekennzeichnet, dass** eine netzartige Leiterstruktur auf der Saugseite des Rotorblatts eine Matrix bildet, an welcher mittels einer Gleichspannungsversorgung eine gewünschte Gleichspannung angelegt ist, und wobei auf der Saugseite des Rotorblattes ein im Wesentlichen gleichbleibendes, flächendeckendes elektrostatisches Feld ausgebildet ist.

2. Rotorblatt nach Anspruch 1,
**dadurch gekennzeichnet, dass** das elektrische Feld im Bereich zwischen der Rotorblattnase und der Hinterkante des Rotorblatts auf der Saugseite des Rotorblatts ausgebildet ist.

3. Rotorblatt nach einem der Ansprüche 1 oder 2,
**dadurch gekennzeichnet, dass** der Abstand benachbarter Leiter in der Matrix der netzartigen Leiterstruktur auf Saugseite des Rotorblattes im Bereich von 2 bis 10 mm, bevorzugt 4 mm oder geringer ist.

4. Rotorblatt nach einem der vorhergehenden Ansprüche.
**dadurch gekennzeichnet, dass** die an der netzartigen Leiterstruktur angelegte Spannung im Bereich von etwa -2 bis -10 kV, bevorzugt etwa -4 kV oder geringer liegt.

5. Windenergieanlage mit wenigstens einem Rotorblatt nach einem der vorhergehenden Ansprüche.

## Claims

1. A wind power installation rotor blade comprising a pressure side and a suction side, **characterised in that** a network-like conductor structure on the suction side of the rotor blade forms a matrix to which a desired dc voltage is applied by means of a dc voltage supply, and wherein on the suction side of the rotor blade a substantially constant electrostatic field covering the surface area is provided.

2. A rotor blade according to claim 1,
**characterised in that** the electric field is provided on the suction side of the rotor blade in the region between the rotor blade leading edge and the trailing edge of the rotor blade.

3. A rotor blade according to one of claims 1 and 2,
**characterised in that** the spacing between adjacent conductors in the matrix of the network-like conductor structure on the suction side of the rotor blade is in the region of from 2 to 10 mm, preferably 4 mm or less.

4. A rotor blade according to any one of the preceding claims,
**characterised in that** the voltage applied to the network-like conductor structure is in the range of about from -2 to -10 kV, preferably about -4 kV or less.

5. A wind power installation comprising at least one rotor blade according to any one of the preceding claims.

## Revendications

1. Pale de rotor pour installation d'énergie éolienne comprenant un intrados et un extrados, **caractérisée en ce qu'**une structure conductrice réticulaire forme sur l'extrados de la pale de rotor une matrice sur laquelle une tension continue souhaitée est appliquée au moyen d'une alimentation en tension continue et **en ce qu'**un champ électrostatique pratiquement constant couvrant la surface est formé sur l'extrados de la pale de rotor.

2. Pale de rotor selon la revendication 1, **caractérisée en ce que** le champ électrique est formé sur l'extrados de la pale de rotor dans la région entre le nez de la pale de rotor et le bord arrière de la pale de rotor.

3. Pale de rotor selon la revendication 1 ou 2, **caractérisée en ce que** l'écart entre conducteurs voisins dans la matrice de la structure conductrice réticulaire sur l'extrados de la pale de rotor est de 2 à 10 mm, de préférence de 4 mm ou moins.

4. Pale de rotor selon l'une quelconque des revendications précédentes, **caractérisée en ce que** la tension appliquée sur la structure conductrice réticulaire est de l'ordre d'environ -2 à -10 kV, de préférence d'environ -4 kV ou moins.

5. Installation d'énergie éolienne comprenant au moins une pale de rotor selon l'une quelconque des revendications précédentes.
